# EUROPEAN PATENT SPECIFICATION

(11) **EP 4 314 192 B1**
(45) Date of publication and mention of the grant of the patent: **25.11.2026**
(21) Application number: 22716387.0
(22) Date of filing: 18.03.2022
(51) Int. Cl.: C09K 9/02, C09K 9/00, G02F 1/15

(54) **COMPOSITION FOR ELECTRODE OF ELECTROCHROMIC DEVICE**
ZUSAMMENSETZUNG FÜR ELEKTRODE EINER ELEKTROCHROMEN VORRICHTUNG
COMPOSITION POUR ÉLECTRODE DE DISPOSITIF ÉLECTROCHROMIQUE

(30) Priority: 22.03.2021 EP 21163896
(43) Date of publication of application: 07.02.2024
(73) Proprietor: Syensqo Specialty Polymers Italy S.p.A., 20021 Bollate (MI) (IT)
(72) Inventor: MARRANI, Alessio, 23900 Lecco (IT); MILLEFANTI, Stefano, 21049 TRADATE (VA) (IT); OLDANI, Claudio, 20015 Parabiago (MI) (IT)
(74) Representative: Ferri, Isabella
(86) International application number: PCT/EP2022/057214
(87) International publication number: WO 2022/200225

(56) References cited:
- WO-A1-2013/092446
- NICOTERA I ET AL: "Investigation of ionic conduction and mechanical properties of PMMA-PVdF blend-based polymer electrolytes", SOLID STATE IONICS, NORTH HOLLAND PUB. COMPANY. AMSTERDAM; NL, NL, vol. 177, no. 5-6, 1 February 2006 (2006-02-01), pages 581 - 588, XP027896037, ISSN: 0167-2738, [retrieved on 20060201]
- MEIJIE YU ET AL: "PVDF/PMMA Brushes Membrane for Lithium-Ion Rechargeable Batteries Prepared via Preirradiation Grafting Technique", JOURNAL OF POLYMER SCIENCE PART B: POLYMER PHYSICS, JOHN WILEY & SONS, INC, US, vol. 46, no. 7, 1 April 2008 (2008-04-01), pages 751 - 758, XP008155126, ISSN: 0887-6266, [retrieved on 20080225], DOI: 10.1002/POLB.21410
- MANUEL STEPHAN ET AL: "Review on gel polymer electrolytes for lithium batteries", EUROPEAN POLYMER JOURNAL, PERGAMON PRESS LTD OXFORD, GB, vol. 42, no. 1, 1 January 2006 (2006-01-01), pages 21 - 42, XP028029631, ISSN: 0014-3057, [retrieved on 20060101], DOI: 10.1016/J.EURPOLYMJ.2005.09.017
- XU JIANGLAN ET AL: "A high-performance gel polymer electrolyte based on poly(vinylidene fluoride)/thermoplastic polyurethane/poly(propylene carbonate) for lithium-ion batteries", JOURNAL OF CHEMICAL SCIENCES, SPRINGER INDIA, IN CO-PUBLICATION WITH INDIAN ACADEMY OF SCIENCES, INDIA, vol. 131, no. 6, 31 May 2019 (2019-05-31), pages 1 - 10, XP036811750, ISSN: 0974-3626, [retrieved on 20190531], DOI: 10.1007/S12039-019-1627-4

## Description

### Reference to related applications

This application claims priority from European application Nr 21163896.0 filed on 22 March 2021.

### Technical Field

The present invention relates to a composition for making an electrolyte layer, to an electrolyte layer obtained therefrom, to an electrochromic device comprising the same, and to its use as glazing.

### Background Art

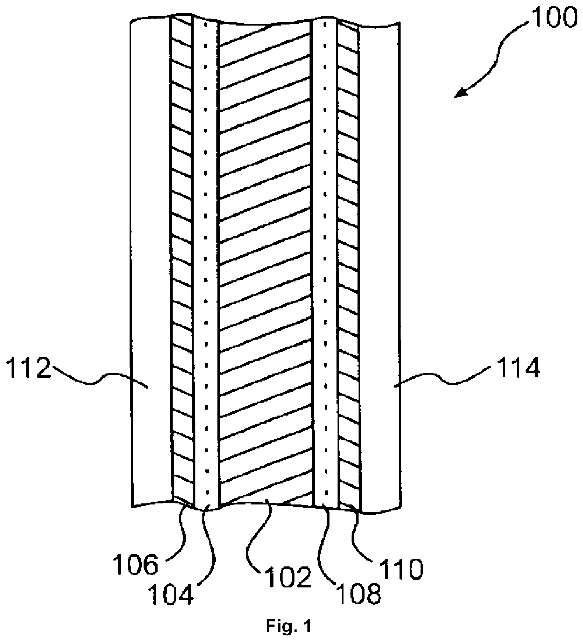

An electrochromic device is a device possessing variable optical properties depending on applied voltage. An electrochromic device can be seen as behaving like a secondary battery which changes colour depending whether the battery is charged or discharged. Two redox couples are involved between the two electrodes to ensure the working of the device, one species being oxidized while the other one is reduced. In consequence, the system switches from the bleached state to the coloured state and the other way around. Structurally, an electrochromic device is generally composed of a stack of different functional layers, as depicted in Figure 1. It is an assembly comprising two supporting substrates (112, 114), which maybe glass substrates, sandwiching two electronic conductive layers among which a voltage can be applied. The electronic conductive layers act as electrodes (i.e. a working electrode and counter-electrode) (106, 110). They are connected with electrochromic layers (104, 108) comprising redox couples. At least one of them is electrochromic, i.e. switching from a bleached state to a coloured state upon change of oxidation state. Said electrochromic layers are separated by an electrolyte layer which is meant to (i) ensure physical and electrical separation between the electrochromic layers (minimum electronic conductivity to avoid short circuit and ensure conservation of optical properties under open-circuit conditions) and (ii) high ionic conductivity, enabling mutual ionic exchanges between the electrochromic layers.

Gel electrolytes have been already proposed in the art for the manufacture of electrochromic devices; among those, gelled vinylidene-fluoride polymer films impregnated with solutions of certain salts in gelling solvents have been proposed in the art.

US 6620342 (ATOFINA CHEMICALS INC.) 16/09/2003 is directed to certain electrochromic assemblies, comprising a conductive narrow composition distribution polyvinylidene fluoride copolymer in combination with an electrolyte. The polyvinylidene fluoride copolymer electrolyte film is manufactured by casting from a solution, with N-methylpyrrolidone, acetone/ethylacetate or acetone being used in exemplified embodiments, dried, recovered as self-standing film and subsequently imbibed/impregnated with a solution of a lithium salt in solvents like propylene carbonate or dimethylcarbonate.

Similarly, US 20100027098 (SAINT-GOBAIN GLASS FRANCE) 04/02/2010 relates to an electrolyte material for an electrically-controllable device having variable optical/energy properties, characterized in that it comprises a self-supporting polymer matrix containing ionic fillers and a liquid for solubilizing said ionic fillers, said liquid not solubilizing said self-supporting polymer matrix, the latter being selected so as to provide a percolation path for said ionic fillers. According to this document, the polymer matrix may be of any of ethylene-vinyl acetate copolymers (EVA); polyurethane (PU); polyvinyl butyral (PVB); polyimides (PI); polyamides (PA); polystyrene (PS); **polyvinylidene fluoride** (PVDF); polyether-etherketones (PEEK); polyethylene oxide (PEO); and copolymers of epichlorohydrin and **polymethyl methacrylate (PMMA).** This document also discloses a method for fabricating such an electrically-controllable device, characterized in that the various layers thereof are assembled by calendering or lamination, optionally with heating. More specifically, according to paragraph [0054], the method for fabricating the electrolyte material made of self-supporting polymer matrix containing ionic fillers and a liquid for solubilizing said ionic fillers, is characterized in that polymer granules are first mixed with a solvent and, if a porous polymer matrix is to be fabricated, a porogenic agent, then the resulting blend is poured on a support and, after the solvent has evaporated, the porogenic agent is removed by washing in a suitable solvent, if said agent has not been removed during the evaporation of the abovementioned solvent, and the resulting self-supporting film is removed. In a subsequent step, the film is then impregnated with liquid for solubilizing said ionic fillers, followed by drainage, if applicable.

Overall, in all of the aforementioned methods, obtaining a self-supported gelled polymer electrolyte requires a first step of fabricating a vinylidene fluoride polymer film by casting from a solution, followed by drying and, optionally, rinsing with an additional solvent; and a second step of re-impregnating the so obtained self-supported film with an additional solution made of a solvent and a salt. Such sequence is quite burdensome, especially when large surfaces of self-supported gelled polymer electrolytes are required, such as, for instance, for electrochromic windows or glazings.

Coating directly a solution of self-supported gelled polymer electrolyte precursors onto glass substrates has been disclosed in INVESTIGATION OF IONIC CONDUCTION AND MECHANICAL PROPERTIES OF PMMA-PVDF BLEND-BASED POLYMER ELECTROLYTES, I. Nicotera et.al, Solid State Ionics, 177 (2006), pp. 581-588. It discloses a liquid composition comprising:
(i) at least one vinylidene fluoride (VDF) copolymer (F), namely PVDF;
(ii) at least one (meth)acrylic polymer (M), namely PMMA;
(iii) at least one organic compound (Slow) possessing a boiling point of less than 120° C, namely THF;
(iv) at least one organic compound (Shigh ) possessing a boiling point of more than 150 °C, namely a mixture of ethylene carbonate (EC) and propylene carbonate (PC);
(v) at least one lithium salt (L), namely LiClO4. This is however not a practicable approach from an industrial perspective: electrochromic glazings are generally manufactured at glass-manufacturing plants, where manipulating polymers, solvents and electrolytes chemicals is not a practical or sustainable option.

The need indeed exists for self-supported gelled polymer electrolytes in the form of as self-standing films ready for assembly, which would possess sufficient adhesion to the glass substrates upon lamination as well as the required optical properties in terms of transparency for use in electrochromic devices.

### Summary of invention

In this field, the Applicant has developed an optimized composition (C_{L}), suitable for the manufacture of self-supported gelled polymer electrolyte films for electrochromic devices, having outstanding transparency and adhesion to glass supports, methods of making such self-supported gelled polymer electrolyte films, self-supported gelled polymer electrolyte films obtained therefrom, electrochromic devices including the same, and methods for their manufacture.

In a first aspect, the present invention relates to a liquid composition [composition (C_{L})], said composition (C_{L}) comprising:
(i) at least one vinylidene fluoride (VDF) copolymer comprising recurring units derived from VDF in an amount exceeding 50.0 % mol of all its recurring units, and, optionally, recurring units derived from at least one additional fluorinated monomer different from VDF [polymer (F)];
(ii) at least one (meth)acrylic polymer comprising recurring units derived from at least one (meth)acrylic monomer in an amount exceeding 50.0 % mol of all its recurring units [polymer (M)];
(iii) at least one organic compound possessing a boiling point of less than 125°C [solvent (S_{low})];
(iv) at least one organic compound possessing a boiling point of more than 150°C [solvent (S_{high})]; and
(iv) at least one lithium salt [salt (L)],
wherein the ratio by weight of polymer (F) to polymer (M) in composition (C_{L}) is at least 3.0.

The present invention avoids the difficulties encountered in the prior art for providing self-supported gelled polymer electrolyte film for electrochromic devices. In particular, the Applicant has surprisingly found that through the careful combination of a VDF polymer with a (meth)acrylic polymer, in certain compositional ranges, in combination with specific organic compounds, it is possible to obtain a liquid mixture capable to provide a self-supported gelled polymer electrolyte film which simultaneously exhibits adequate mechanical properties and outstanding adhesion to glazing supports, while delivering ionic conductivity and transparency needed for being used in an electrochromic device.

This and other aspects of the invention will be clarified in the written description below which sets out additional features and advantages of the present invention.

### Brief description of drawings

Figure 1 is a schematic cross-section of an electrochromic device. Description of embodiments

### The polymer (F)

The composition (C_{L}) comprises one or more than one polymer (F).

As said, polymer (F) is a vinylidene fluoride (VDF) polymer comprising recurring units derived from VDF and, optionally, recurring units derived from at least one additional fluorinated monomer different from VDF.

Generally, polymer (F) will comprise recurring units derived from vinylidene fluoride (VDF) in an amount of at least 60.0 % mol, preferably at least 70.0 % mol, more preferably at least 75.0 % mol, with respect to the total amount of moles of recurring units of polymer (F).

Polymer (F) may be a homopolymer of vinylidene fluoride. Preferably, polymer (F) is a VDF copolymer, comprising VDF, in an amount of at least 50.0 % mol, and recurring units derived from at least one additional fluorinated monomer different from VDF. VDF copolymers are generally preferred for their ability to be processed from solution and to provide gelled materials.

The fluorinated monomer different from VDF is advantageously selected from the group consisting of vinyl fluoride (VF₁); trifluoroethylene (VF₃); chlorotrifluoroethylene (CTFE); 1,2-difluoroethylene; tetrafluoroethylene (TFE); hexafluoropropylene (HFP); perfluoro(alkyl)vinyl ethers, such as perfluoro(methyl)vinyl ether (PMVE), perfluoro(ethyl) vinyl ether (PEVE) and perfluoro(propyl)vinyl ether (PPVE); perfluoro(1,3-dioxole); perfluoro(2,2-dimethyl-1,3-dioxole) (PDD). Preferably, the fluorinated monomer different from VDF is chosen from chlorotrifluoroethylene (CTFE), hexafluoroproylene (HFP), trifluoroethylene (VF₃) and tetrafluoroethylene (TFE). Still more preferably, said monomer is hexafluoroproylene .

Optionally, polymer (F) may comprise recurring units derived from one or more than one fluorine-free monomer, also referred to as "hydrogenated monomer(s)". The choice of the said hydrogenated monomer(s) is not particularly limited and may include alpha-olefins, (meth)acrylic monomers, vinyl ether monomers, styrenic mononomers. For the sake of optimizing chemical resistance, embodiment's wherein the polymer (F) is essentially free from recurring units derived from said hydrogenated comonomer(s) are preferred.

Polymer (F) is preferably a polymer comprising :
(a) at least 75.0 % mol, preferably at least 85.0 % mol of recurring units derived from vinylidene fluoride (VDF);
(b) from 1.0 to 25.0% mol, preferably from 2.0 to 15.0 %, more preferably from 3.0 to 12.0 % mol of recurring units derived from one fluorinated monomer different from VDF, as detailed above; and
(c) optionally from 0.1 to 5.0 % mol, preferably 0.1 to 3.0 % mol, more preferably 0.1 to 1.0% mol of recurring units derived from one or more additional monomer(s) different from VDF,
all the aforementioned % by moles being referred to the total moles of recurring units of the VDF copolymer.

More preferably, polymer (F) is a polymer consisting essentially of :
(a) at least 75.0 % mol, preferably at least 85.0 % mol of recurring units derived from vinylidene fluoride (VDF);
(b) from 1.0 to 25.0% mol, preferably from 2.0 to 15.0 % mol, more preferably from 3.0 to 12.0 % mol of recurring units derived from one additional fluorinated monomer different from VDF, as detailed above, in particular recurring units derived from HFP; and
(c) optionally from 0.1 to 5.0 % mol, preferably 0.1 to 3.0 % mol, more preferably 0.1 to 1.0% mol of recurring units derived from one or more additional monomer(s) different from VDF and HFP,
all the aforementioned % by moles being referred to the total moles of recurring units of the VDF copolymer.

Defects, end chains, impurities, chains inversions or branching's and the like may be additionally present in the polymer (F) in addition to the said recurring units, without these components substantially modifying the behaviour and properties of the polymer (F).

As non-limitative examples of polymers (F) useful in the present invention, mention can be notably made of VDF/TFE copolymers, VDF/TFE/HFP copolymers, VDF/TFE/CTFE copolymers, VDF/TFE/TrFE copolymers, VDF/CTFE copolymers, VDF/HFP copolymers, VDF/TFE/HFP/CTFE copolymers and the like. Copolymers of VDF and HFP are preferred as polymers (F).

It is generally understood that for optimizing gel-formation, the polymer (F) is required to possess a heat of fusion of at least 15 J/g and of at most 30 J/g, when determined according to ASTM D3418.

This range of crystallinity has been found critical to simultaneously enable easy solubilization in the organic compounds mixture as mentioned above, while simultaneously delivering ability to capture and retain in gelled form substantial amounts of high boiling organic compounds, so as to ensure associated ionic conductivity through electrolyte solution percolation mechanisms, and yet delivering outstanding mechanical performances, and ability to be handled as a self-standing film.

Preferably, polymer (F) possesses a heat of fusion of advantageously at least 17 J/g, more preferably at least 18 J/g and/or of at advantageously at most 29 J/g, more preferably at most 28 J/g, when determined according to ASTM D3418.

Similarly, the semi-crystalline behaviour of polymer (F) can be characterized with reference to its heat of fusion. In particular, polymer (F) has advantageously a melting point (Tₘ₂) advantageously of at least 120° C, preferably at least 125°C, more preferably at least 128°C and of at most 155°C, preferably at most 150°C, more preferably at most 145°C, when determined by DSC, at a heating rate of 10°C/min, according to ASTM D 3418.

Further, for the sake of enhancing mechanical performances, ability to ensure self-standing ability during assembly in the electrochromic device, and durable physical separation between electrochromic layers, it is advantageous for polymer (F) to possess a melt flow rate (at 230°C/21.6 kg, ASTM D1238) of about 0.1 to 20.0 g/10 min, preferably of about 0.5 to 15.0 g/10 min, more preferably of about 0.5 to 10.0 g/10 min.

When polymer (F) is a VDF copolymer, it generally possesses an inherent viscosity (η_{i VDF copolymer}), measured as above detailed, of at least 1.2 dl/g, preferably of at least 1.3 dl/g, more preferably of at least 1.4 dl/g, even more preferably of at least 1.5 dl/g. Upper limit for η_{i VDF copolymer} will be of at most 3.5 dl/g, preferably of at most 3.0 dl/g, more preferably of most 2.5 dl/g.

**The polymer (M)**

Polymer (M) comprises recurring units derived from at least one (meth)acrylic monomer in an amount exceeding 50.0 % mol, of all its recurring units [polymer (M)].

The polymer (M) may comprise recurring units selected from the group of formulae (j), (jj), (jjj), and generally comprises recurring units of formula (jv) in an amount exceeding 50.0 % mol of all its recurring units: 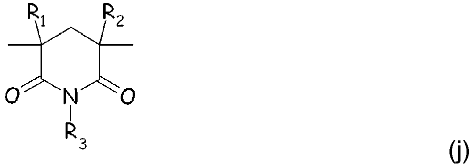 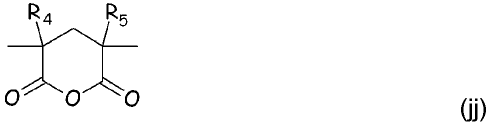 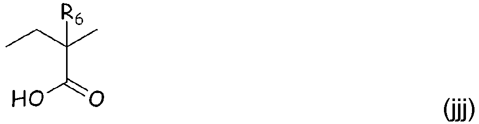 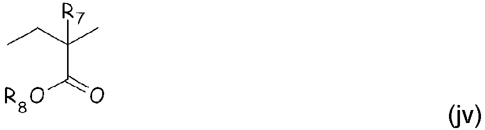 wherein R₁, R₂, R₄, R₅, R₆, R₇, equal to or different from each other are independently H or C₁₋₂₀ alkyl group, R₃ and R₈, equal to or different from each other, are independently H, alkyl, cycloalkyl, alkaryl, aryl, heterocyclic C₁₋₃₆ group.

Optionally polymer (M) can comprise additional recurring units different from (j), (jj), (jjj), (jv), typically derived from ethylenically unsaturated monomers, such as notably olefins, preferably ethylene, propylene, 1-butene, styrene monomers, such as styrene, alpha-methyl-styrene and the like. Nevertheless, polymers (M) essentially consisting of units (jv), possibly in combination with units (j), (jj), (jjj), as detailed above, are preferred.

Preferably, polymer (M) is a polymer comprising recurring units derived from one or more than one C₁-C₆ alkyl (meth)acrylate, i.e. units (jv) wherein R₇, equal to or different from each other at each occurrence is H or CH₃, and R₈, equal to or different from each other at each occurrence, selected from C₁-C₆ alkyl groups. More particularly, a polymer (M) comprising units derived from methylmethacrylate as units (jv), is preferred.

Polymer (M) is advantageously selected from methyl methacrylate homopolymers and methyl methacrylate copolymers which have a preponderant content of methyl methacrylate and a minor content of other monomers selected from alkyl(meth)acrylates, acrylonitrile, butadiene, styrene and isoprene.

Advantageous results are obtained with homopolymers of methyl methacrylate and copolymers of methyl methacrylate and of C₂ -C₆ alkyl acrylates. Outstanding results are obtained with homopolymers of methyl methacrylate and copolymers of methyl methacrylate and of C₂ -C₄ alkyl acrylates such as, for example, butyl acrylate. The methyl methacrylate content of the copolymers is generally at least approximately 55.0% mol and preferably at least approximately 60.0% mol. It generally does not exceed approximately 90.0% mol; in most cases it does not exceed 85.0% mol, the listed percentages in moles being referred to the total moles of recurring units of polymer (M).

Advantageously, the preferred methyl methacrylate copolymers used as polymer (M) may contain 0.0 to 20.0 % mol and preferably 0.0 to 15.0% mol of at least one of methyl acrylate, ethyl acrylate and butyl acrylate, the listed percentages in moles being referred to the total moles of recurring units of polymer (M).

Polymer (M) may be functionalised, that is to say it may contain, for example, acid, acid chloride, alcohol or anhydride functional groups. These functional groups may be introduced by grafting or by copolymerisation. Advantageously, polymer (M) may comprise an acid functional group provided by copolymerizing a (meth)acrylic acid comonomer, e.g. acrylic acid, as in units of formula (jj). Two neighbouring (meth)acrylic acid functional groups may lose water to form an anhydride, as in units of formula (jjj). The proportion of recurring units having functional groups, and in particular, the proportion of recurring units of formula (jj) and/or (jjj) may be between 0.0 and 15.0 % mol, with respect to all recurring units of the polymer (M).

Polymer (M) has advantageously a glass transition temperature of at least 80°C, preferably of at least 85 °C, more preferably of at least 100°C, when measured according to according to ASTM D 3418.

According to certain preferred embodiments, polymer (M) is a polymethylmethacrylate homopolymer.

### The salt (L)

Salt (L) is advantageously intended to behave as an electrolyte or conductive ionic compound when dissolved in a solvent. Salt (L) is generally selected from the group consisting of LiBF₄, LiBF₆ LiClO₄ LiPF₆, lithium trifluoromethanesulfonate (LiCF₃SO₃), lithium bis(trifluoromethanesulfonyl)imide (LiC₂F₆NO₄S₂ or LiTFSI), lithium bis(fluorosulfonyl)imide (F₂LiNO₄S_{2 or} LiFSI), lithium trifluoroacetate (LiCF₃CO₂), LiAsF₆, LiSbF₆, LiB₁₀Cl₁₀, lower aliphatic lithium carboxylates, LiAlCl₄, LiCl, LiBr, Lil, chloroboran lithium, and lithium tetraphenylborate. These salts (L) may be used either individually or in combinations of two or three or more. In particular, salt (L) is selected from the group consisting of LiFSI, LiTFSI, LiCF₃SO₃, LiClO4 LiBF₄ or LiBF₆ and/or LiPF₆.

### The solvent (S_{low})

Solvent (S_{low}) is one or more than one organic compound possessing a boiling point of less than 125°C, preferably of less than 120°C, more preferably of less than 118°C.

For the avoidance of doubts, the expression "boiling point" is used hereunder to designate standard boiling point, i.e. the temperature at which boiling occurs under a pressure of one bar.

Solvent (S_{low}) has advantageously ability to solubilize polymer (F), when used in an amount of at least 5.0 and at most 15.0 weight parts per weight part of polymer (F).

Generally, solvent (S_{low}) is selected from the group consisting of acetone (boiling point = 56°C), ethyl acetate (boiling point = 77°C), methyl ethyl ketone (aka MEK) (boiling point = 79°C), methyl isobutyl ketone (boiling point = 116°C); dimethoxyethane (boiling point = 85°C), dimethylcarbonate (boiling point = 90°C).

Particularly good results have been obtained when the solvent (S_{low}) was at least one of methyl ethyl ketone and dimethylcarbonate.

Solvent (S_{low}), as above detailed, thanks to its moderate boiling point, while yet being able to solubilize the particular polymer (F) hereby concerned, possesses yet sufficient fugacity/volatility so as to be able to be at least partially removed from the film (W_{F}) in an efficient manner, without letting any significant residue which may detrimentally affect the performances of the device (EC).

### The solvent (S_{high})

Solvent (S_{high}) is one or more than one organic compound possessing a boiling point of more than 150°C.

Solvent (S_{high}) is a polar organic solvent which has advantageously ability to solubilize the salt (L), as detailed above, and which has advantageously ability to swell polymer (F).

The choice of a solvent (S_{high}) possessing a boiling point of more than 150 °C is material for ensuring this solvent (S_{high}) will substantially remain in the film (F_{GE}), when drying the film (W_{F}) for removing solvent (S_{low}).

The solvent (S_{high}) is in particular selected from the group consisting of N-methylpyrrolidone (boiling point = 202°C); N,N-dimethylformamide (boiling point = 153°C), Triethylphosphate (boiling point = 215°C); tributylphosphate (boiling point = 289°C), ethylene carbonate (boiling point = 242°C), propylene carbonate (boiling point = 243°C), mono-fluoroethylenecarbonate (boiling point = 202°C).

Preferred solvents (S_{high}) are those possessing a boiling point of at least 170°C, preferably at least 180°C, even more preferably at least 200°C.

The selection of solvents (S_{high}) of high boiling point is particularly beneficial for avoiding any loss of this component during the processing of the composition (C_{L}) to provide the self-standing electrode film.

Particularly good results have been obtained when using ethylene carbonate, propylene carbonate, mono-fluoroethylenecarbonate or mixtures thereof.

Particularly preferred is a mixture of ethylene carbonate and propylene carbonate.

### The composition (C_{L})

The different ingredients of the composition (C_{L}) are adjusted to obtain a formulation which possesses adequate processability for being transformed into a film, in particular adequate liquid viscosity, while delivering, upon further processing and drying, a gelled film having the target performances.

It is generally understood that composition (C_{L}) will comprise:
- polymer (F) in an amount of at least 10.0 % wt, preferably at least 15.0 % wt, more preferably at least 20.0 % wt; and/or in an amount of at most 40.0 % wt, preferably at most 35.0 % wt, more preferably at most 30.0 wt%; and/or
- polymer (M) in an amount of at least 0.2 % wt, preferably at least 0.5 % wt, more preferably at least 1.0 % wt; and/or in an amount of at most 15.0 % wt, preferably at most 10.0 % wt, more preferably at most 5.0 wt%; and/or
- salt (L) in an amount of at least at least 0.5 % wt, preferably at least 1.0 % wt, more preferably at least 1.5 % wt; and/or in an amount of at most 10.0 % wt, preferably at most 7.5 % wt, more preferably at most 5.0 % wt; and/or
- solvent (S_{high}) in an amount of at least at least 1.0 % wt, preferably at least 2.0 % wt, more preferably at least 3.0 % wt; and/or in an amount of at most 20.0 % wt, preferably at most 15.0 % wt, more preferably at most 12.0 wt%
- solvent (S_{low}) in an amount of at least at least 30.0 % wt, preferably at least 35.0 % wt, more preferably at least 40.0 % wt; and/or in an amount of at most 85.0 % wt, preferably at most 80.0 % wt, more preferably at most 75.0 wt%;
all the wt% being referred to the total weight of the composition (C_{L}).

The ratio by weight of polymer (F) to polymer (M) in composition (C_{L}) is at least 3.0. For the avoidance of doubts the ratio is calculated by dividing the amount by weight of polymer (F) by the amount by weight of polymer (M) in the composition. When the ratio by weight of polymer (F) to polymer (M) in composition (C_{L}) is below 3.0 gelled films with insufficient optical properties for use in electrochromic applications are obtained. In particular gelled films having insufficient transparency are obtained.

The ratio by weight of polymer (F) to polymer (M) can be up to 200.0. The ratio by weight of polymer (F) to polymer (M) may advantageously be from 3.0 to 100.0, even from 3.0 to 50.0. Good results were obtained with a ratio by weight of polymer (F) to polymer (M) of 3.5 to 20.0.

Composition (C_{L}) possesses a solution viscosity of 600 cP to 8000 cP preferably of 900 cP to 7000 cP, more preferably of 1100 cP to 6000 cP, when determined at 50°C, using a Brookfield viscosimeter, according to ASTM D 2196 (Standard Test Methods for Rheological Properties for Non-Newtonian Materials by Rotational (Brookfield type) Viscosimeter).

The invention further relates to a method of making composition (C_{L}) comprising the ingredients as listed above [method (C)], said method (C) comprising mixing said ingredients.

The method (C) of making composition (C_{L}) can be performed in any manner. Generally, polymer (F) and polymer (M) are dissolved under stirring at a temperature of at least 30°C, preferably at least 35 °C in the presence of solvent (S_{high}), solvent (S_{low}) and salt (L).

Conventional mixing devices can be used, although it is generally preferred to use those which would provide mild stirring conditions, with minimum incorporation of gases/air.

It is understood that all the features described above for the ingredients of composition (C_{L}) equally apply to method (C) above detailed.

In a further aspect, the present invention relates to a method [method (G)] of making a self-supported gelled polymer electrolyte film [film (F_{GE})], said method comprising:
Step 1 - preparing a composition (C_{L}), as above detailed;
Step 2 - processing said composition (C_{L}) to obtain a wet film [film (F_{w})];
Step 3 - drying film (F_{w}) to obtain a self-supported gelled polymer electrolyte film [film (F_{GE})].

It is understood that all the features described above for the ingredients of composition (C_{L}) equally apply to method (G) above detailed.

Step 1 can be performed according to the techniques described above for method (C).

Step 2 can be carried out according to standard known techniques for processing a liquid composition into a film. Step 2 is typically performed by coating composition (C_{L}) on a carrier support. Suitable coating techniques include for instance spray coating, spin-coating, brush-coating, slot-die coating, blade coating gravure coating, reverse roll coating, doctor-blade roller coating, Meyer rod coating, reverse gravure roll coating, and other variations of these methods.

The choice of carrier support is not limited. Supports are generally selected to minimize adhesion to the film (F_{GE}), so as to easily detach and recover the same. Rigid carrier supports or flexible carrier support may be used depending on the layout of the casting step.

In Step 3 of the process, drying of the film (F_{w}) is performed. By drying film (F_{w}), the content of solvent (S_{low}) is at least partially volatilized. In this manner, a film (F_{GE}) comprising an amount of solvent (S_{low}) of generally at most 2.0 % wt, preferably of at most 1.0 %wt, with respect to the total weight of film (F_{GE}) is obtained. The lower boundary for the content of solvent (S_{low}) is not critical. Solvent (S_{low}) may be substantially absent from film (F_{GE}), that is to say that it may even be no longer detected in the said film (F_{GE}).

Drying can be effected in any manner. using different techniques. It is generally preferred to dry film (F_{w}) in a heated oven under reduced pressure. This facilitates the evaporation of solvent (S_{low}) while maintaining solvent (S_{high}) in the film (F_{GE}).

To this aim, the choice of polymer (F), as described above, is material for achieving this goal. Polymer (F), thanks to its specific semi-crystalline structure, has the ability to retain significant amounts of solvent (S_{high}) under a gelled form, while allowing solvent (S_{low}) to evaporate.

As a consequence, film (F_{GE}), at the end of this step, will comprise an amount of solvent (S_{low}) of at most 2.0 % wt, preferably at most 1.0 % wt, more preferably at most 0.5 % wt, with respect to the total weight of film (F_{GE}).

The content of solvent (S_{low}) in film (F_{GE}) can be determined according to known techniques, including notably by quantitative determination (e.g. by gas-chromatography) of vapour released from a sample (head space analysis), and/or by weight loss determinations, e.g. by TGA, taking appropriate account of possible presence of water moisture.

The substantial absence of solvent (S_{low}) in film (F_{GE}) is such to ensure that film (F_{GE}), during subsequent assembling steps, which may include heating steps, does not generate any significant amount of off-gases or volatile losses, which may detrimentally impact (e.g. through formation of bubbles or irregularities) the optical and electrochromic performances of the electrochromic device comprising the same.

Drying is generally carried out by heating at a temperature of at least 35° C, preferably at least 40°C, more preferably at least 50°C.

Drying can be, at least partially, carried out under vacuum. When drying is performed under vacuum, film (F_{w}) may be exposed to a first drying step with a pressure between atmospheric pressure and 40 kPa, preferably between 80 and 40 kPa, and then to a second drying step at a pressure of less than 20 kPa, preferably less than 10kPa, even more preferably less than 5 kPa.

When drying of film (F_{w}) is performed under vacuum, said film (F_{w}) is exposed to a reduced pressure, as above detailed, at a temperature of at least 30°C, preferably at least 35°C, more preferably at least 40°C and/or of at most 120°C, preferably at most 110°C, more preferably at most 100° C.

According to other embodiments, drying may comprise:
- a first step of exposing film (F_{w}) to a first temperature (T₁) of at least 35° C, preferably at least 40 °C, more preferably at least 50°C, under atmospheric pressure, e.g. in a ventilated oven, either under air (possibly dry air) or under inert gas (e.g. nitrogen, argon...) or under a reduced pressure ranging from 80 to 40 kPa; and
- a second step of exposing film (F_{w}) to a second temperature (T₂) under a pressure of less than 20 kPa, wherein said second temperature (T₂) does not exceed said first temperature (T₁).

A preferred technique for manufacturing film (F_{GE}) is film casting.

According to casting technique, in Step 2, the composition (C_{L}) is advantageously applied trough a dispensing head onto a moving belt, generally having a smooth and non-sticky surface, so as to create a film (F_{W}). The composition (C_{L}) maybe applied to the moving belt using a doctor blade die, slot die, curtain coater, or other configurations.

When casting technique is used, generally Step 3 (i.e. the step of drying) may be achieved in the casting device itself. According to this embodiment, film (F_{w}) on the moving belt is conveyed to a drying zone, where the solvent (S_{low}) is at least partially removed. Such drying can be notably achieved through circulating heated air or inert gas. In the final step of casting, the film (F_{GE}) is removed (peeled) from the moving belt, while this latter cycles back to the dispensing head.

A supporting film may be used, in which case, said supporting film, generally PET, is delivered from a roll onto the moving belt before the dispensing head, and the assembly of film (F_{GE}) on the supporting film is removed from the moving belt and rolled; this technique is hence generally referred as "roll to roll" casting.

The film (F_{GE}) can so be produced under the form of continuous lengths having the width of the roller, e.g. having width of at least 100 mm, preferably at least 200 mm, more preferably at least 250 mm.

A width which has been found particularly advantageous for delivering films (F_{GE}) is of 350 to 1200 mm, preferably of 400 to 1000 mm, e.g. around about 500 mm.

Still, another aspect of the present invention is a self-supported gelled polymer electrolyte film [film (F_{GE})], said film (F_{GE}) comprising:
(i) at least one vinylidene fluoride (VDF) copolymer comprising recurring units derived from VDF in an amount exceeding 50.0 % mol of all its recurring units, and, optionally, recurring units derived from at least one additional fluorinated monomer different from VDF, [polymer (F)];
(ii) at least one (meth)acrylic polymer comprising recurring units derived from at least one (meth)acrylic monomer in an amount exceeding 50 % mol of all its recurring units, [polymer (M)];
(iii) at least one organic compound possessing a boiling point of more than 150°C [solvent (S_{high})]; and
(iv) at least one lithium salt [salt (L)],
wherein the ratio by weight of polymer (F) to polymer (M) in the film is at least 3.0.

The expression "self-supported" is hereby used according to its usual meaning. Although film (F_{GE}) may be provided in combination with a carrier support, film (F_{GE}), by itself, has sufficient mechanical properties for being manipulated and handled without compromising its integrity.

Film (F_{GE}) may be obtained from the method (G), described above, although any other manufacturing method can be followed for its manufacture. Notably, use can be made alternatively of a method whereas polymer (F) and polymer (M) are mixed and processed, generally from the molten state, e.g. through extrusion, into a film, and said film is then soaked with a liquid composition including solvent (S_{high}) and salt (L).

When film (F_{GE}) is obtained from method (G), as explained above, said film (F_{GE}) may additionally comprise solvent (S_{low}). As said above, film (F_{GE}) comprises advantageously an amount of solvent (S_{low}) of at most 2.0 % wt, preferably of at most 1.0 %wt, with respect to the total weight of said film (F_{GE}). The lower boundary for content of solvent (S_{low}) is not critical, and such solvent (S_{low}) may be substantially absent from said film (F_{GE}), that is to say that it may even be no longer detected in the said film (F_{GE}).

When film (F_{GE}) comprises residues of solvent (S_{low}), that is to say that a detectable amount of this solvent (S_{low}) can be identified through appropriate analytical techniques by one of ordinary skills in the art applied to film (F_{GE}), lower amount of solvent (S_{low}) is not particularly limited. Film (F_{GE}) may comprise an amount of solvent (S_{low}) of at least 0.1 ppm, preferably of at least 1.0 ppm, more preferably of at least 5.0 ppm, with respect to the total weight of film (F_{GE}).

Film (F_{GE}) may be provided as assembled with a support film, e.g. a PET film. This will be especially the case when film (F_{GE}) is manufactured by casting

Film (F_{GE}) of the invention has advantageously a thickness of at least 50 µm, preferably at least 65 µm, more preferably at least 80 µm, and/or of at most 800 µm, preferably at most 600 µm, more preferably at most 400 µm.

Films (F_{GE}) having thickness of 100 to 300 µm have been found particularly advantageous.

More generally, film (F_{GE}) will advantageously comprise:
- from 35.0 to 70.0 % wt, preferably from 45.0 to 65.0% wt of polymer (F);
- from 1.0 to 30.0 % wt, preferably from 3.0 to 20.0 % wt of polymer (M);
- from 5.0 to 50.0 % wt, preferably from 8.0 to 40.0 % wt of solvent (S_{high});
- from 5.0 to 40.0 % wt, preferably from 7.0 to 35.0 % wt of salt (L); and
- an amount of solvent (S_{low}) of less than 2.0% wt,
whereas the %wt are referred to the total weight of film (F_{GE}).

The ratio by weight of polymer (F) to polymer (M) in film (F_{GE}) is at least 3.0. For the avoidance of doubts the ratio is calculated by dividing the amount by weight of polymer (F) by the amount by weight of polymer (M) in film (F_{GE}).

The ratio by weight of polymer (F) to polymer (M) can be up to 200.0. The ratio by weight of polymer (F) to polymer (M) may advantageously be from 3.0 to 100.0, even from 3.0 to 50.0. Good results were obtained with a ratio by weight of polymer (F) to polymer (M) of 3.5 to 20.0.

When the ratio by weight of polymer (F) to polymer (M) in film (F_{GE}) is below 3.0 unsatisfactory optical properties for use of the film in electrochromic applications are obtained.

Film (F_{GE}) preferably possesses a transmittance of at least 85 %, preferably at least 90 %, more preferably at least 95 %, when determined according to ASTM D1003 on film (F_{GE}) immersed in water.

Film (F_{GE}) preferably possesses a haze value of at most 2.0 %, preferably at most 1.5% when determined according to ASTM D1003 on film (F_{GE}) immersed in water.
In a further aspect, the present invention pertains to a method of making at least one electrochromic device [device (EC)], said method comprising:
- assembling a self-supported gelled polymer electrolyte film (F_{GE}) as detailed above in a stack comprising in the following order: (a) a first supporting substrate; (b) a first electronically conductive layer; (c) a first electrochromic layer; (d) said film (F_{GE}); (e) a second electrochromic layer; (f) a second electronically conductive layer; and (g) a second supporting substrate, so as to provide the electrochromic device.

The features disclosed above for the film (F_{GE}) and its component are applicable here *mutatis mutandis.*

As said, the method of the invention comprises assembling said film (F_{GE}) in a stack comprising in the following order: (a) a first supporting substrate; (b) a first electronically conductive layer; (c) a first electrochromic layer; (d) said film (F_{GE}); (e) a second electrochromic layer; (f) a second electronically conductive layer; and (g) a second supporting substrate, so as to provide the electrochromic device.

### Supporting substrates

The supporting substrates which can be used in this step are in particular selected from the group consisting of glass substrates (such as float glass, etc.) and transparent polymer substrates, such as polymethyl methacrylate (PMMA), polycarbonate (PC), polyethylene terephthalate (PET), polyethylene naphthoate (PEN) and cycloolefin copolymers (COC).

Nevertheless, glass substrates are particularly preferred.

First and second supporting substrate may be identical or may be different; they may differ because of thickness, material constitution, etc...

### Electrochromic layer

The electrochromic layer comprises at least one electrochromic active material. An electrochromic active material is a chemical species which reversibly changes its light absorption properties in a certain wavelength range via a redox reaction induced by an electrical potential. Chemical species that do not change light absorption properties at any wavelength via redox reaction induced by an electrical potential are referred to as a non-electrochromic active material. A non-electrochromic active material is hence advantageously a material only playing the role of a reservoir of ionic fillers or a counter-electrode.

So, at least one electrochromic layer comprises an electrochromic active material. Each electrochromic layer comprises at least one electrochromic active material and a non-electrochromic active material.

According to a first embodiment, the two electrochromic layers comprise an electrochromic active material. The two electrochromic layers may comprise identical electrochromic active material. Alternatively they may comprise different electrochromic active materials, in particular having a complementary coloration, one of them having an anodic coloration, and the other having a cathodic coloration. Electrochromic devices (EC) comprising two electrochromic materials are generally referred to as 'dual electrochrome' devices. Although two electrochromic materials in one device (EC) may add complexity, dual electrochrome devices (EC) offer the advantage of having the possibility of several colour changes within a practicable electrical potential window. Furthermore, 'dual electrochrome' devices may possess enhanced contrast ratio, as both the electrochromic layers contribute to the electrochromism of the device (EC).

According to another alternative, one of the electrochromic layers comprises an electrochromic active material and the other electrochromic layer does not comprise any electrochromic active material, but comprises a non-electrochromic active material. Such devices (EC) are generally referred to as 'single electrochrome' devices.

The electrochromic material or materials may be selected from:
(1) inorganic materials, such as oxides of tungsten, nickel, iridium, niobium, tin, bismuth, vanadium, nickel, antimony and tantalum, individually or in a mixture of two of them or more; if applicable in a mixture with at least one additional metal, such as titanium, tantalum or rhenium;
(2) organic materials, such as electronically conductive polymers, like derivatives of polythiophene, polypyrrole or polyaniline;
(3) complexes, such as Prussian blue;
(4) metallopolymers;
(5) combinations of at least two electrochromic materials selected from at least two families (1) to (4).

One of the most widely used and most investigated electrochromic materials is tungsten oxide (WO₃), which goes from a blue coloration to a transparent coloration according to its state of insertion of the fillers. It is an electrochromic material with cathodic coloration, that is its colored state corresponds to the inserted (or reduced) state and its decolored state corresponds to the deinserted (or oxidized) state. During the construction of the device (EC), it is customary to combine it with an electrochromic material with an anodic coloration such as nickel oxide or iridium oxide, of which the coloration mechanism is complementary, in a so-called 'dual electrochrome' device (EC). The light contrast of the system is thereby amplified. All the materials mentioned above are inorganic, but it is also possible to combine complexes with the inorganic electrochromic materials, such as Prussian blue or metallopolymers, or even organic materials such as electronically conductive polymers (derivatives of polythiophene, polypyrrole, or polyaniline, etc.), or even to use only one category of these materials.

The non-electrochromic active material may be an optically neutral material in the oxidation states concerned, such as vanadium oxide, a ultra-thin or nanostructured layer of silver, a ultra-thin or nanostructured layer of carbon.

### Electronically conductive layer

The electronically conductive layers are in particular metal layers, such as layers of silver, gold, platinum and copper; or transparent conductive oxide (TCO) layers, such as layers of tin-doped indium oxide (In₂O₃:Sn or ITO), antimony-doped indium oxide (In₂O₃:Sb), fluorine-doped tin oxide (SnO₂:F) and aluminum-doped zinc oxide (ZnO:Al); or multilayers of the TCO/metal/TCO type, the TCO and the metal being selected in particular from those listed above; or multilayers of the NiCr/metal/NiCr type, the metal being selected in particular from those listed above.

When the device (EC) is intended to operate by transmission, the electronically conductive layers are generally transparent oxides of which the electronic conduction has been amplified by doping such as In₂I₃:Sn, In₂I₃:Sb, ZnO:Al or SnO₂:F. Tin-doped indium oxide (In₂O₃:Sn or ITO) is frequently selected for its high electronic conductivity properties and its low light absorption. When the system is intended to operate by reflection, one of the electronically conductive layers may be a metal layer.

Standard techniques can be used for assembling the first supporting substrate; the first electronically conductive layer; the first electrochromic layer; the film (F_{GE}); the second electrochromic layer; the second electronically conductive layer; and the second supporting substrate. Electrical connections anchored to the electronically conductive layers can be arranged by usual technique, and generally wired conductors are selected for further enabling connection of the device (EC) to an appropriate source of current/voltage.

More specifically, the invention pertains to an electrochromic device [device (EC)] comprising a self-supported gelled polymer electrolyte film [film (F_{GE})], said film (F_{GE}) comprising:
(i) at least one vinylidene fluoride (VDF) copolymer comprising recurring units derived from VDF in an amount exceeding 50 % mol, of all its recurring units, and, optionally, recurring units derived from at least one additional fluorinated monomer different from VDF [polymer (F)];
(ii) at least one (meth)acrylic polymer comprising recurring units derived from at least one (meth)acrylic monomer in an amount exceeding 50 % mol of all its recurring units [polymer (M)], wherein the ratio by weight of polymer (F) to polymer (M) is at least 3.0;
(iii) at least one organic compound possessing a boiling point of more than 150°C [solvent (S_{high})]; and
(iv) at least one lithium salt [salt (L)].

The device (EC) of the present invention can be manufactured by the method as above detailed.

Device (EC) of the invention will generally consist essentially of a stack comprising in the following order: (a) a first supporting substrate; (b) a first electronically conductive layer; (c) a first electrochromic layer; (d) said film (F_{GE}); (e) a second electrochromic layer; (f) a second electronically conductive layer; and (g) a second supporting substrate. Other peripheral elements, including e.g. electric connections, voltage/current generators and associated switch(es) may be connected/incorporated in the device (EC) as above described, without these elements substantially modifying the principles of operation of the device (EC).

All the preferred features described above in connection with the method of the invention having regards to device (EC), film (F_{GE}), polymer (F), polymer (M), solvent (S_{low}), solvent (S_{high}), salt (L) are equally preferred features associated to corresponding components of the device (EC) of the present invention.

The invention further pertains to the use of the device (EC), as above detailed, as smart glazing.

The invention will be now described with reference to the following examples whose scope is merely illustrative and not intended to limit the scope of the invention.

### Description of examples

### Raw materials:

Polymer (F): SOLEF^{®} 21510 PVDF is a VDF copolymer having a melting point of about 133°C, a heat of fusion of 20 to 24 J/g, commercially available from Solvay Specialty Polymers Italy SpA.
Bis(trifluoromethane)sulfonimide lithium salt (LiTFSI, hereinafter) was supplied from Sigma Aldrich (code 544094-100G).
Polymer (M): PMMA, a poly(methyl methacrylate) polymer available from Sigma Aldrich (code 182230; Mw ~120,000 as measured by GPC)

### General procedure for the preparation of compositions (C_{L})

Compositions (C_{L}) were prepared by having solvent (S_{low}) and (S_{high}) subsequently added in a graduated borosilicate bottle. Said liquid ingredients were stirred at room temperature by using a magnetic stirrer. After 5 minutes of stirring, lithium salt (LiTFSI) was added (Salt L), under stirring and the bottle was closed. Stirring was continued until the complete lithium salt dissolution occurred. After this, polymer (F) was added in three portions: 50% of the weight was added and as soon as this portion was completely dissolved, the bottle was warmed up to 50°C. When this temperature was reached, 25% of the weight of the polymer (F) was added. When this second portion of polymer (F) was completely dissolved the remaining 25% weight portion was added. The bottle was closed and the temperature was raised up to 60°C. After polymer (F) complete dissolution, the polymer (M) - when used - was added in one aliquot. The formulations were maintained under stirring till complete dissolution of the polymer (M) and the temperature was kept overnight and reduced down at 45°C. Compositions (C_{L}) of Ex. 1, 2, 3 (according to the invention), 4C and %C (of comparison) were obtained from the ingredients listed in the amounts as reported in Table 1 and Table 2.

### Solution viscosity measurement:

Brookfield viscosity measurement of these formulations is made according to ASTM D2196 method. The viscosity measurement is run at 50°C.

**Table 1**

| **Ingredients** | | Formulation | Formulation | Formulation |
|---|---|---|---|---|
| | | **Ex. 1** | **Ex. 2** | **Ex. 4C** |
| **Type** | **I.D.** | %wt | %wt | %wt |
| solvent (S_{high}) | Propylene carbonate (PC) | 3.4 | 8.6 | 8.8 |
| Salt (L) | LiTFSI | 8.6 | 3.4 | 3.5 |
| Polymer (F) | SOLEF^{®} 21510 PVDF | 25.6 | 25.6 | 26.3 |
| solvent (S_{low}) | MEK | 59.9 | 59.8 | 61.4 |
| Polymer (M) | PMMA | 2.5 | 2.6 | 0 |
| Brookfield Viscosity | Measured @ 50°C | 1450 cPs | 3900 cPs | 3300 cPs |

**Table 2**

| **Ingredients** | | Formulation | Formulation |
|---|---|---|---|
| | | **Ex. 4** | **Ex. 5C** |
| **Type** | **I.D.** | %wt | %wt |
| solvent (S_{high}) | Propylene carbonate /ethylene carbonate 1:1 weight ratio | 2.0 | 1.8 |
| Salt (L) | LiTFSI | 4.8 | 4.7 |
| Polymer (F) | SOLEF^{®} 21510 PVDF | 12.5 | 12.3 |
| solvent (S_{low}) | MEK | 77.0 | 75.5 |
| Polymer (M) | PMMA | 3.8 | 5.7 |

### General procedure for the manufacture of films: procedure "A"

The formulation of compositions (C_{L} ) of Ex. 1 to 5C were heated up to 65°C and stirred. The casting knife (150mm width Elcometer blade) height was set to be 1300 microns and placed on a 1 cm thick tempered glass plate 25 cm wide and 35 cm long. The formulation was poured onto the glass and by an automatic film applicator, Elcometer 4340, the casting knife was pulled across the glass plate and the solution was spread coating an area of 15 cm by 20 cm. At the end of this process the glass plate was placed in a vacuum oven where the temperature was set at 80°C and the dynamic vacuum was kept at 600mbar. After 30 minutes, the vacuum was brought to 4 kPa as static vacuum, by closing the oven inlet valves. The temperature was raised up to 100°C and the film was kept in the oven for 2 and a half hours. After this timing, in the static oven, the temperature was switched off and left to drop to room temperature overnight. Then the vacuum was removed by opening air inlet valve, once the pressure inside the oven reached the atmospheric pressure, the film was removed from the oven and then peeled off the glass. Then the said self-standing film was closed in a vacuum bag to prevent water uptake. Films obtained through this procedure are labelled as "A" in Tables 3 and 4. Their properties and compositions are also listed in Tables 3 and 4.

### General procedure for the manufacture of films "R2R": procedure "B"

The preparation of compositions (C_{L} ) of Ex. 2 was repeated as described in above, so as to produce a batch weighting about 35 Kg. Formulation obtained was heated up to 65°C and stirred. The Roll to roll equipment used was equipped with a 700 mm width roll of 150 microns thick PET, tensioned at 210N; the equipment further comprised 5 oven zones, long 1 meter each, with an air inlet of 1.2 m³/min, and set with the following temperature profile: Oven 1: 80°C; Oven 2: 95°C , Oven 3: 100°C Oven 4: 100°C , Oven 5 : 120°C. The casting knife was set to have a height of 1.4 mm from the PET substrate. The PET substrate was set to move at 0.1m/min and the solution was poured in the tank before the knife. When the tank was filled with the solution, the speed of the substrate was increased up to 0.3 m/min. The solution was then refilled accordingly to the amount of casted film needed. After the 5 ovens, the substrate, carrying the polymeric film, has about 5 meters of distance from the collector of the film. Once the formulation was over, the carrier was left to move till the film was completely wrapped on the collector. Then the machine was stopped and the roll (substrate plus polymeric film ) was collected out of the machine. The above produced film, was 44 cm wide and 7.3 m long. Properties of the film so obtained, labelled as "B", are listed in Table 2.
Further, compositional data of the so-obtained films are also provided in Table 3.

### Adhesion test for films characterization

The test was performed placing a specimen of the polymeric film between two glass plates of 11 by 11 cm of 2.5 mm thick, previously checked to ensure that the glass plates were perfectly clean and visibly defect-less. The obtained film was placed carefully onto the first plate by the help of a rubber roller to calendar the film on the glass removing all the air bubbles. As soon as the film was positioned, the top glass was placed on the top of the film and calendared with rubber roll to make the three layer structure more compact. The three layers structure was placed in a vacuum bag and sealed to prevent water uptake. The bag containing the three layers structure was placed in an autoclave and then pressurized with nitrogen at a pressure of 25 abs bars . Once this pressure was reached, the autoclave was kept at constant pressure for a duration of 20 min. At the end of the test the autoclave was depressurized at atmospheric pressure and the sample was retrieved from the bag. Assemblies glass-Film-glass obtained from the films 1-A, 2-A and 2-B showed good adhesion of film with no sliding of glass plates and no delamination.
Assembly glass-Film-glass obtained from the film 3C-A showed poor adhesion of film with sliding of glass plates. Delamination observed.

### Optical properties characterization

Films were submitted to determination of transmittance and haze, while being immersed in water, according to ASTM D1003.

### Conductivity determination

Ionic conductivity of the membrane was calculated using the AC impedance method in which the sample is sandwiched between two stainless steel electrodes: conductivity (σ) in S/cm is then calculated from the real impedance intercept (R) of the Nyquist plot using the formula σ=(1/R)•(t/A) where t=sample thickness and A=sample area. The measurement was performed at room temperature.

**Table 3**

| Gelled film | | **Film 1-A** | **Film 2-A** | **Film 4C-A** | **Film 2-B** |
|---|---|---|---|---|---|
| | | %wt | %wt | %wt | %wt |
| S_{high} | Propylene carbonate (PC) | 8.3 | 20.9 | 22.3 | 20.9 |
| Salt (L) | LiTFSI | 20.9 | 8.3 | 8.9 | 8.3 |
| Polymer (F) | Solef^{®} 21510 PVDF | 62.6 | 62.6 | 66.8 | 62.6 |
| Polymer (M) | PMMA | 6.2 | 6.2 | 0.0 | 6.2 |
| S_{low} | MEK | <2.0 | <2.0 | <2.0 | <2.0 |
| | | | | | |
| Thickness | (µm) | 290 | 325 | 260 | 340 |
| Transmittance | (%) | 97.1 | 98.4 | 97.4 | 98.7 |
| Haze | (%) | 1.3 | 1.0 | 0.9 | 0.9 |
| Adhesion | | Yes | Yes | No | Yes |

**Table 4**

| Gelled film | | **Film 4-A** | **Film 5C-A** |
|---|---|---|---|
| | | %wt | %wt |
| S_{high} | Propylene carbonate/ethylene carbonate 1:1 weight ratio | 8.4 | 7.7 |
| Salt (L) | LiTFSI | 20.9 | 19.3 |
| Polymer (F) | Solef^{®} 21510 PVDF | 54.4 | 50.1 |
| Polymer (M) | PMMA | 16.3 | 23.0 |
| S_{low} | MEK | <2.0 | <2.0 |
| | | | |
| Thickness | (µm) | 305 | 240 |
| Transmittance | (%) | 96.7 | < 80 |
| Haze | (%) | 1.4 | 9.0 |

## Claims

1. A liquid composition [composition (C_{L}2. , said composition (C_{L}3. comprising:
(i) at least one vinylidene fluoride copolymer comprising recurring units derived from vinylidene fluoride in an amount exceeding 50 % mol of all its recurring units, even in an amount of at least 60.0 % mol, preferably at least 70.0 % mol, more preferably at least 75.0 % mol, and, optionally, recurring units derived from at least one additional fluorinated monomer different from vinylidene fluoride [polymer (F)];
(ii) at least one (meth)acrylic polymer comprising recurring units derived from at least one (meth)acrylic monomer in an amount exceeding 50 % mol of all its recurring units [polymer (M)];
(iii) at least one organic compound possessing a boiling point of less than 125° C [solvent (S_{low})];
(iv) at least one organic compound possessing a boiling point of more than 150° C [solvent (S_{high})]; and
(v) at least one lithium salt [salt (L)],
wherein the ratio by weight of polymer (F) to polymer (M) is at least 3.0.

2. The composition (C_{L}5. of claim 1 wherein the fluorinated monomer different from vinylidene fluoride is selected in the group consisting of vinyl fluoride ; trifluoroethylene ; chlorotrifluoroethylene; 1,2-difluoroethylene; tetrafluoroethylene; hexafluoropropylene; perfluoro(alkyl)vinyl ethers, such as perfluoro(methyl)vinyl ether, perfluoro(ethyl) vinyl ether and perfluoro(propyl)vinyl ether ; perfluoro(1,3-dioxole); perfluoro(2,2-dimethyl-1,3-dioxole).

3. The composition (C_{L}7. of claim 1 or 2, wherein polymer (F) is a polymer comprising :
(a)at least 75.0 % mol, preferably at least 85.0 % mol of recurring units derived from vinylidene fluoride;
(b) from 1.0 to 25.0%, preferably from 2.0 to 15.0 %, more preferably from 3.0 to 12.0 % mol of recurring units derived from one fluorinated monomer different from vinylidene fluoride; and
(c)optionally from 0.1 to 5.0 % mol, preferably 0.1 to 3.0 % mol, more preferably 0.1 to 1.0 % mol of recurring units derived from one or more additional monomer(s) different from vinylidene fluoride,
all the aforementioned % by moles being referred to the total moles of recurring units of the vinylidene fluoride copolymer.

4. The composition (C_{L}9. of any one of the preceding claims in which polymer (F) has a heat of fusion of at least 15 J/g and of at most 30 J/g, when determined according to ASTM D3418; and/or
wherein polymer (F) has a melting point (Tₘ₂) of at least 120° C, preferably at least 125° C, more preferably at least 128° C; and/or of at most 155° C, preferably at most 150° C, more preferably at most 145° C, when determined by DSC, at a heating rate of 10° C/min, according to ASTM D 3418.

5. The composition (C_{L}11. of any one of the preceding claims, wherein polymer (M) comprises recurring units of formula (jv) in an amount exceeding 50.0 % mol of all its recurring units, and may comprise recurring units selected from the group of formulae (j), (jj), (jjj): 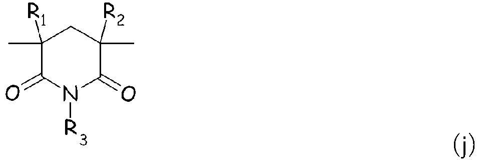 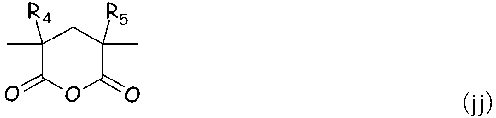 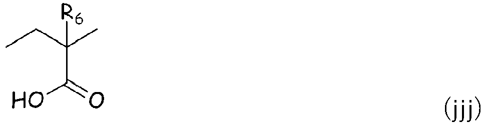 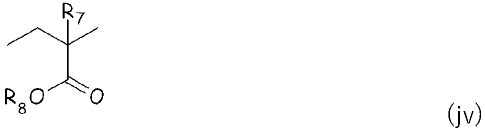 wherein R₁, R₂, R₄, R₅, R₆, R₇, equal to or different from each other are independently H or C₁₋₂₀ alkyl group, R₃ and R₈, equal to or different from each other, are independently H, alkyl, cycloalkyl, alkaryl, aryl, heterocyclic C₁₋₃₆ group.

6. The composition (C_{L}13. of any one of the preceding claims, wherein the salt (L) is selected from the group consisting of LiBF₄, LiBF₆ LiClO₄ LiPF₆, lithium trifluoromethanesulfonate (LiCF₃SO₃), lithium bis(trifluoromethanesulfonyl)imide (LiC₂F₆NO₄S₂ or LiTFSI), lithium bis(fluorosulfonyl)imide (F₂LiNO₄S_{2 or} LiFSI), lithium trifluoroacetate (LiCF₃CO₂), LiAsF₆, LiSbF₆, LiB₁₀Cl₁₀, lower aliphatic lithium carboxylates, LiAlCl₄, LiCl, LiBr, Lil, chloroboran lithium, and lithium tetraphenylborate; preferably selected from the group consisting of LiFSI, LiTFSI, LiCF₃SO₃, LiClO4 LiBF₄ or LiBF₆ and/or LiPF₆.

7. The composition (C_{L}15. of any one of the preceding claims wherein solvent (S_{low}) is selected from the group consisting of acetone, ethyl acetate, methyl ethyl ketone , methyl isobutyl ketone; dimethoxyethane (boiling point = 85° C), dimethylcarbonate; preferably at least one of methyl ethyl ketone and dimethylcarbonate.

8. The composition (C_{L}17. of any one of the preceding claims wherein the solvent (S_{high}) is selected from the group consisting of N-methylpyrrolidone; N,N-dimethylformamide , triethylphosphate; tributylphosphate, ethylene carbonate, propylene carbonate , mono-fluoroethylenecarbonate.

9. The composition (C_{L}19. of any one of the preceding claims which comprises:
- polymer (F) in an amount of at least 10.0 % wt, preferably at least 15.0 % wt, more preferably at least 20.0 % wt; and/or in an amount of at most 40.0 % wt, preferably at most 35.0 % wt, more preferably at most 30.0 wt%;
and/or
- polymer (M) in an amount of at least 0.2 % wt, preferably at least 0.5 % wt, more preferably at least 1.0 % wt; and/or in an amount of at most 15.0 % wt, preferably at most 10.0 % wt, more preferably at most 5.0 wt%;
and/or
- salt (L) in an amount of at least at least 0.5 % wt, preferably at least 1.0 % wt, more preferably at least 1.5 % wt; and/or in an amount of at most 10.0 % wt, preferably at most 7.5 % wt, more preferably at most 5.0 wt%; and/or
- solvent (S_{high}) in an amount of at least at least 1.0 % wt, preferably at least 2.0 % wt, more preferably at least 3.0 % wt; and/or in an amount of at most 20.0 % wt, preferably at most 15.0 % wt, more preferably at most 12.0 wt%
- solvent (S_{low}) in an amount of at least at least 30.0 % wt, preferably at least 35.0 % wt, more preferably at least 40.0 % wt; and/or in an amount of at most 85.0 % wt, preferably at most 80.0 % wt, more preferably at most 75.0 wt%;
all the wt% being referred to the total weight of the composition (C_{L}).

10. A method [method (C)] of making the composition (C_{L}21. of any one of Claims 1 to 9, said method comprising dissolving polymer (F) and polymer (M) under stirring at a temperature of at least 30° C, preferably of at least 35° C in the presence of solvent (S_{high}), solvent (S_{low}) and of salt (L).

11. A method [method (G)] of making a self-supported gelled polymer electrolyte film [film (F_{GE})], said method comprising:
Step 1 - preparing a composition (C_{L}) of any one of Claims 1 to 9;
Step 2 - processing said composition (C_{L}) to obtain a wet film [film (F_{w})];
Step 3 - drying said wet film (F_{w}) to obtain a self-supported gelled polymer electrolyte film [film (F_{GE})].

12. The method of Claim 11, wherein Step 1 is method (C) of claim 10; and/or wherein Step 2 is carried out by coating composition (C_{L}) on a support.

13. The method of claim 11 or 12, wherein wet film (F_{w}25. is dried to obtain a film (F_{GE}) comprising an amount of solvent (S_{low}) of at most 2.0 % wt, preferably of at most 1.0 %wt, with respect to the total weight of said film (F_{GE}).

14. A self-supported gelled polymer electrolyte film [film (F_{GE}27. , said film (F_{GE}) comprising:
(i) at least one vinylidene fluoride copolymer comprising recurring units derived from vinylidene fluoride in an amount exceeding 50 % mol of all its recurring units, and, optionally, recurring units derived from at least one additional fluorinated monomer different from vinylidene fluoride [polymer (F)];
(ii) at least one (meth)acrylic polymer comprising recurring units derived from at least one (meth)acrylic monomer in an amount exceeding 50 % mol of all its recurring units [polymer (M)];
(iii) at least one organic compound possessing a boiling point of more than 150° C [solvent (S_{high})]; and
(iv) at least one lithium salt [salt (L)],
wherein the ratio by weight of polymer (F) to polymer (M) is at least 3.0.

15. An electrochromic device [device (EC)] comprising a self-supported gelled polymer electrolyte film [film (F_{GE})] of claim 14.

16. A method of making an electrochromic device [device (EC)], said method comprising assembling a self-supported gelled polymer electrolyte film (F_{GE}) of claim 14 in a stack comprising in the following order: (a) a first supporting substrate; (b) a first electronically conductive layer; (c) a first electrochromic layer; (d) film (F_{GE}); (e) a second electrochromic layer; (f) a second electronically conductive layer; and (g) a second supporting substrate, to provide the electrochromic device.

## Patentansprüche

1. Eine flüssige Zusammensetzung [Zusammensetzung (C_{L})], wobei die Zusammensetzung (C_{L}) umfasst:
(i) mindestens ein Vinylidenfluorid-Copolymer, umfassend Wiederholungseinheiten, die von Vinylidenfluorid abgeleitet sind, in einer Menge von mehr als 50 Mol-% aller seiner Wiederholungseinheiten, sogar in einer Menge von mindestens 60,0 Mol-%, vorzugsweise mindestens 70,0 Mol-%, bevorzugter mindestens 75,0 Mol-%, und gegebenenfalls Wiederholungseinheiten, die von mindestens einem zusätzlichen fluorierten Monomer, das von Vinylidenfluorid verschieden ist, abgeleitet sind [Polymer (F)];
(ii) mindestens ein (Meth)acrylpolymer, umfassend Wiederholungseinheiten, die von mindestens einem (Meth)acrylmonomer abgeleitet sind, in einer Menge von mehr als 50 Mol-% aller seiner Wiederholungseinheiten [Polymer (M)];
(iii) mindestens eine organische Verbindung mit einem Siedepunkt von weniger als 125°C [Lösungsmittel (S_{low})];
(iv) mindestens eine organische Verbindung mit einem Siedepunkt von mehr als 150°C [Lösungsmittel (S_{high})]; und
(v) mindestens ein Lithiumsalz [Salz (L)],
wobei das Gewichtsverhältnis von Polymer (F) zu Polymer (M) mindestens 3,0 beträgt.

2. Die Zusammensetzung (C_{L}) nach Anspruch 1, wobei das fluorierte Monomer, das von Vinylidenfluorid verschieden ist, aus der Gruppe ausgewählt ist, bestehend aus Vinylfluorid; Trifluorethylen; Chlortrifluorethylen; 1,2-Difluorethylen; Tetrafluorethylen; Hexafluorpropylen; Perfluor(alkyl)vinylethern, wie Perfluor(methyl)vinylether, Perfluor(ethyl)vinylether und Perfluor(propyl)vinylether; Perfluor(1,3-dioxol); Perfluor(2,2-dimethyl-1,3-dioxol).

3. Die Zusammensetzung (C_{L}) nach Anspruch 1 oder 2, wobei Polymer (F) ein Polymer ist, umfassend:
(a) mindestens 75,0 Mol-%, vorzugsweise mindestens 85,0 Mol-% Wiederholungseinheiten, die von Vinylidenfluorid abgeleitet sind;
(b) von 1,0 bis 25,0 Mol-%, vorzugsweise von 2,0 bis 15,0 Mol-%, bevorzugter von 3,0 bis 12,0 Mol-% Wiederholungseinheiten, die von einem fluorierten Monomer, das von Vinylidenfluorid verschieden ist, abgeleitet sind; und
(c) gegebenenfalls von 0,1 bis 5,0 Mol-%, vorzugsweise 0,1 bis 3,0 Mol-%, bevorzugter 0,1 bis 1,0 Mol-% Wiederholungseinheiten, die von einem oder mehreren zusätzlichen Monomer(en), die von Vinylidenfluorid verschieden sind, abgeleitet sind, wobei sich alle vorgenannten Mol-% auf die Gesamtmolzahl der Wiederholungseinheiten des Vinylidenfluorid-Copolymers beziehen.

4. Die Zusammensetzung (C_{L}) nach einem der vorhergehenden Ansprüche, wobei Polymer (F) eine Schmelzwärme von mindestens 15 J/g und höchstens 30 J/g aufweist, bestimmt gemäß ASTM D3418; und/oder wobei Polymer (F) einen Schmelzpunkt (Tₘ₂) von mindestens 120°C, vorzugsweise mindestens 125°C, bevorzugter mindestens 128°C; und/oder höchstens 155°C, vorzugsweise höchstens 150°C, bevorzugter höchstens 145°C aufweist, bestimmt mittels DSC bei einer Heizrate von 10°C/min gemäß ASTM D3418.

5. Die Zusammensetzung (C_{L}) nach einem der vorhergehenden Ansprüche, wobei Polymer (M) Wiederholungseinheiten der Formel (jv) in einer Menge von mehr als 50,0 Mol-% aller seiner Wiederholungseinheiten umfasst und Wiederholungseinheiten umfassen kann, die aus der Gruppe der Formeln (j), (jj), (jjj) ausgewählt sind: 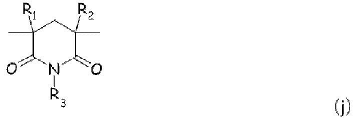 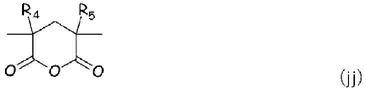 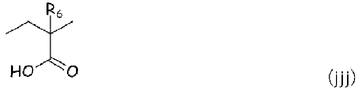 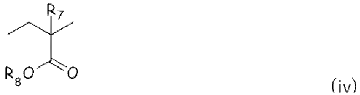 wobei R₁, R₂, R₄, R₅, R₆, R₇, gleich oder verschieden voneinander, unabhängig H oder eine C₁₋₂₀-Alkylgruppe sind, R₃ und R₈, gleich oder verschieden voneinander, unabhängig H, Alkyl, Cycloalkyl, Alkaryl, Aryl, Heterocyclo oder eine C₁₋₃₆-Gruppe sind.

6. Die Zusammensetzung (C_{L}) nach einem der vorhergehenden Ansprüche, wobei das Salz (L) aus der Gruppe ausgewählt ist, bestehend aus LiBF₄, LiBF₆, LiClO₄, LiPF₆, Lithiumtrifluormethansulfonat (LiCF₃SO₃), Lithiumbis(trifluormethansulfonyl)imid (LiC₂F₆NO₄S₂ oder LiTFSI), Lithiumbis(fluorsulfonyl)imid (F₂LiNO₄S₂ oder LiFSI), Lithiumtrifluoracetat (LiCF₃CO₂), LiAsF₆, LiSbF₆, LiB₁₀Cl₁₀, niederen aliphatischen Lithiumcarboxylaten; LiAlCl₄, LiCl, LiBr, LiI, Chlorboran-Lithium und Lithiumtetraphenylborat; vorzugsweise ausgewählt aus der Gruppe bestehend aus LiFSI, LiTFSI, LiCF₃SO₃, LiClO₄, LiBF₄ oder LiBF₆ und/oder LiPF₆.

7. Die Zusammensetzung (C_{L}) nach einem der vorhergehenden Ansprüche, wobei Lösungsmittel (S_{low}) aus der Gruppe ausgewählt ist, bestehend aus Aceton, Ethylacetat, Methylethylketon, Methylisobutylketon, Dimethoxyethan (Siedepunkt = 85°C), Dimethylcarbonat; vorzugsweise mindestens eines von Methylethylketon und Dimethylcarbonat.

8. Die Zusammensetzung (C_{L}) nach einem der vorhergehenden Ansprüche, wobei Lösungsmittel (S_{high}) aus der Gruppe ausgewählt ist, bestehend aus N-Methylpyrrolidon; N,N-Dimethylformamid, Triethylphosphat; Tributylphosphat, Ethylencarbonat, Propylencarbonat, Monofluorethylencarbonat.

9. Die Zusammensetzung (C_{L}) nach einem der vorhergehenden Ansprüche, welche umfasst:
- Polymer (F) in einer Menge von mindestens 10,0 Gew.-%, vorzugsweise mindestens 15,0 Gew.-%, bevorzugter mindestens 20,0 Gew.-%; und/oder in einer Menge von höchstens 40,0 Gew.-%, vorzugsweise höchstens 35,0 Gew.-%, bevorzugter höchstens 30,0 Gew.-%; und/oder
- Polymer (M) in einer Menge von mindestens 0,2 Gew.-%, vorzugsweise mindestens 0,5 Gew.-%, bevorzugter mindestens 1,0 Gew.-%; und/oder in einer Menge von höchstens 15,0 Gew.-%, vorzugsweise höchstens 10,0 Gew.-%, bevorzugter höchstens 5,0 Gew.-%; und/oder
- Salz (L) in einer Menge von mindestens mindestens 0,5 Gew.-%, vorzugsweise mindestens 1,0 Gew.-%, bevorzugter mindestens 1,5 Gew.-%; und/oder in einer Menge von höchstens 10,0 Gew.-%, vorzugsweise höchstens 7,5 Gew.-%, bevorzugter höchstens 5,0 Gew.-%; und/oder
- Lösungsmittel (S_{high}) in einer Menge von mindestens mindestens 1,0 Gew.-%, vorzugsweise mindestens 2,0 Gew.-%, bevorzugter mindestens 3,0 Gew.-%; und/oder in einer Menge von höchstens 20,0 Gew.-%, vorzugsweise höchstens 15,0 Gew.-%, bevorzugter höchstens 12,0 Gew.-%
- Lösungsmittel (S_{low}) in einer Menge von mindestens mindestens 30,0 Gew.-%, vorzugsweise mindestens 35,0 Gew.-%, bevorzugter mindestens 40,0 Gew.-%; und/oder in einer Menge von höchstens 85,0 Gew.- %, vorzugsweise höchstens 80,0 Gew.-%, bevorzugter höchstens 75,0 Gew.-%;
wobei sich alle Gew.-% auf das Gesamtgewicht der Zusammensetzung (C_{L}) beziehen.

10. Ein Verfahren [Verfahren (C)] zur Herstellung der Zusammensetzung (C_{L}) nach einem der Ansprüche 1 bis 9, wobei das Verfahren das Auflösen von Polymer (F) und Polymer (M) unter Rühren bei einer Temperatur von mindestens 30° C, vorzugsweise mindestens 35° C, in Gegenwart von Lösungsmittel (S_{high}), Lösungsmittel (S_{low}) und Salz (L) umfasst.

11. Ein Verfahren [Verfahren (G)] zur Herstellung eines selbsttragenden gelierten Polymer-Elektrolytfilms [Film (F_{GE})], wobei das Verfahren umfasst:
Schritt 1 - Herstellen einer Zusammensetzung (C_{L}) nach einem der Ansprüche 1 bis 9;
Schritt 2 - Verarbeiten der Zusammensetzung (C_{L}) zu einem Nassfilm [Film (F_{w})];
Schritt 3 - Trocknen des Nassfilms (F_{w}), um einen selbsttragenden gelierten Polymer-Elektrolytfilm [Film (F_{GE})] zu erhalten.

12. Das Verfahren nach Anspruch 11, wobei Schritt 1 das Verfahren (C) nach Anspruch 10 ist; und/oder wobei Schritt 2 durch Beschichten der Zusammensetzung (C_{L}) auf einen Träger durchgeführt wird.

13. Das Verfahren nach Anspruch 11 oder 12, wobei der Nassfilm (F_{w}) getrocknet wird, um einen Film (F_{Gel}) zu erhalten, umfassend eine Menge an Lösungsmittel (S_{low}) von höchstens 2,0 Gew.-%, vorzugsweise höchstens 1,0 Gew.-%, bezogen auf das Gesamtgewicht des Films (F_{GE}).

14. Ein selbsttragender gelierter Polymer-Elektrolytfilm [Film (F_{GE})], wobei der Film (F_{GE}) umfasst:
(i) mindestens ein Vinylidenfluorid-Copolymer, umfassend Wiederholungseinheiten, die von Vinylidenfluorid abgeleitet sind, in einer Menge von mehr als 50 Mol-% aller seiner Wiederholungseinheiten, und gegebenenfalls Wiederholungseinheiten, die von mindestens einem zusätzlichen fluorierten Monomer, das von Vinylidenfluorid verschieden ist, abgeleitet sind [Polymer (F)];
(ii) mindestens ein (Meth)acrylpolymer, umfassend Wiederholungseinheiten, die von mindestens einem (Meth)acrylmonomer abgeleitet sind, in einer Menge von mehr als 50 Mol-% aller seiner Wiederholungseinheiten [Polymer (M)];
(iii) mindestens eine organische Verbindung mit einem Siedepunkt von mehr als 150°C [Lösungsmittel (S_{high})]; und
(iv) mindestens ein Lithiumsalz [Salz (L)],
wobei das Gewichtsverhältnis von Polymer (F) zu Polymer (M) mindestens 3,0 beträgt.

15. Eine elektrochrome Vorrichtung [Vorrichtung (EC)], umfassend einen selbsttragenden gelierten Polymer-Elektrolytfilm [Film (F_{GE})] nach Anspruch 14.

16. Ein Verfahren zur Herstellung einer elektrochromen Vorrichtung [Vorrichtung (EC)], wobei das Verfahren das Zusammenfügen eines selbsttragenden gelierten Polymer-Elektrolytfilms (F_{GE}) nach Anspruch 14 in einem Stapel umfasst, der in der folgenden Reihenfolge umfasst: (a) ein erstes Trägersubstrat; (b) eine erste elektronisch leitfähige Schicht; (c) eine erste elektrochrome Schicht; (d) den Film (F_{GE}); (e) eine zweite elektrochrome Schicht; (f) eine zweite elektronisch leitfähige Schicht; und (g) ein zweites Trägersubstrat, um die elektrochrome Vorrichtung bereitzustellen.

## Revendications

1. Une composition liquide [composition (Cₗ)], ladite composition (Cₗ) comprenant :
(i) au moins un copolymère de fluorure de vinylidène comprenant des unités récurrentes dérivées du fluorure de vinylidène en une quantité supérieure à 50 % en moles de toutes ses unités récurrentes, même en une quantité d'au moins 60,0 % en moles, de préférence d'au moins 70,0 % en moles, plus préférablement d'au moins 75,0 % en moles, et, facultativement, des unités récurrentes dérivées d'au moins un monomère fluoré supplémentaire différent du fluorure de vinylidène [polymère (F)] ;
(ii) au moins un polymère (méth)acrylique comprenant des unités récurrentes dérivées d'au moins un monomère (méth)acrylique en une quantité supérieure à 50 % en moles de toutes ses unités récurrentes [polymère (M)] ;
(iii) au moins un composé organique possédant un point d'ébullition inférieur à 125°C [solvant (S_{low})] ;
(iv) au moins un composé organique possédant un point d'ébullition supérieur à 150°C [solvant (S_{high})] ; et
(v) au moins un sel de lithium [sel (L)],
dans laquelle le rapport en poids du polymère (F) au polymère (M) est d'au moins 3,0.

2. La composition (Cₗ) de la revendication 1 dans laquelle le monomère fluoré différent du fluorure de vinylidène est choisi dans le groupe constitué par le fluorure de vinyle ; le trifluoroéthylène ; le chlorotrifluoroéthylène ; le 1,2-difluoroéthylène ; le tétrafluoroéthylène ; l'hexafluoropropylène ; les éthers perfluoro(alkyl)vinyliques, tels que l'éther perfluoro(méthyl)vinylique, l'éther perfluoro(éthyl)vinylique et l'éther perfluoro(propyl)vinylique ; le perfluoro(1,3-dioxole) ; le perfluoro(2,2-diméthyl-1,3-dioxole).

3. La composition (Cₗ) de la revendication 1 ou 2, dans laquelle le polymère (F) est un polymère comprenant :
(a) au moins 75,0 % en moles, de préférence au moins 85,0 % en moles d'unités récurrentes dérivées du fluorure de vinylidène ;
(b) de 1,0 à 25,0 % en moles, de préférence de 2,0 à 15,0 % en moles, plus préférablement de 3,0 à 12,0 % en moles d'unités récurrentes dérivées d'un monomère fluoré différent du fluorure de vinylidène ; et
(c) facultativement de 0,1 à 5,0 % en moles, de préférence de 0,1 à 3,0 % en moles, plus préférablement de 0,1 à 1,0 % en moles d'unités récurrentes dérivées d'un ou plusieurs monomère(s) supplémentaire(s) différent(s) du fluorure de vinylidène, tous les % en moles susmentionnés étant rapportés au nombre total de moles d'unités récurrentes du copolymère de fluorure de vinylidène.

4. La composition (Cₗ) de l'une quelconque des revendications précédentes dans laquelle le polymère (F) présente une chaleur de fusion d'au moins 15 J/g et d'au plus 30 J/g, lorsqu'elle est déterminée selon ASTM D3418 ; et/ou
dans laquelle le polymère (F) présente un point de fusion (Tₘ₂) d'au moins 120°C, de préférence d'au moins 125°C, plus préférablement d'au moins 128°C ; et/ou d'au plus 155°C, de préférence d'au plus 150°C, plus préférablement d'au plus 145°C, lorsqu'il est déterminé par DSC, à une vitesse de chauffage de 10°C/min, selon ASTM D3418.

5. La composition (Cₗ) de l'une quelconque des revendications précédentes, dans laquelle le polymère (M) comprend des unités récurrentes de formule (iv) en une quantité supérieure à 50,0 % en moles de toutes ses unités récurrentes, et peut comprendre des unités récurrentes choisies dans le groupe des formules (i), (ii), (iii) : 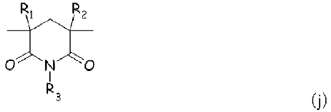 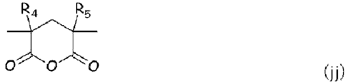 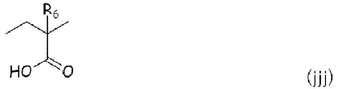 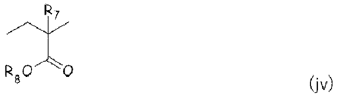 dans lesquelles R₁, R₂, R₄, R₅, R₆, R₇, identiques ou différents les uns des autres, sont indépendamment H ou un groupe alkyle en C₁₋₂₀, R₃ et R₈, identiques ou différents l'un de l'autre, sont indépendamment H, alkyle, cycloalkyle, alkaryle, aryle, hétérocyclique en C₁₋₃.

6. La composition (Cₗ) de l'une quelconque des revendications précédentes, dans laquelle le sel (L) est choisi dans le groupe constitué par LiBF₄, LiPF₆, LiClO₄, LiPF₆, le trifluorométhanesulfonate de lithium (LiCF₃SO₃), le bis(trifluorométhanesulfonyl)imide de lithium (LiC₂F₆NO₄S₂, ou LITFSI), le bis(fluorosulfonyl)imide de lithium (F₂LiNO₄S₂ ou LiFSI), le trifluoroacétate de lithium (LiCF₃CO₂), LiAsF₆, LiSbF₆, LiB₁₀Cl₁₀, les carboxylates de lithium aliphatiques inférieurs, LiAlCl₄, LiCl, LiBr, LiI, le tétraphénylborate de lithium ; de préférence choisi dans le groupe constitué par LiFSI, LiTFSI, LiCF₃SO₃, LiClO₄, LiBF₄ ou LiBF₆ et/ou LiPF₆.

7. La composition (Cₗ) de l'une quelconque des revendications précédentes, dans laquelle le solvant (S_{low}) est choisi dans le groupe constitué par l'acétone, l'acétate d'éthyle, la méthyléthylcétone, le carbonate de méthyle et de butyle (point d'ébullition = 85°C), le carbonate de diméthyle ; de préférence au moins l'un de la méthyléthylcétone et du carbonate de diméthyle.

8. La composition (Cₗ) de l'une quelconque des revendications précédentes dans laquelle le solvant (S_{high}) est choisi dans le groupe constitué par la N-méthylpyrrolidone ; le N,N-diméthylformamide ; le phosphate de triéthyle ; le phosphate de tributyle, le carbonate d'éthylène, le carbonate de propylène, le monofluoroéthylènecarbonate.

9. La composition (Cₗ) de l'une quelconque des revendications précédentes qui comprend :
- le polymère (F) en une quantité d'au moins 10,0 % en poids, de préférence d'au moins 15,0 % en poids, plus préférablement d'au moins 20,0 % en poids ; et/ou en une quantité d'au plus 40,0 % en poids, plus préférablement d'au plus 35,0 % en poids, plus préférablement d'au plus 30,0 % en poids ; et/ou
- le polymère (M) en une quantité d'au moins 0,2 % en poids, de préférence d'au moins 0,5 % en poids, plus préférablement d'au moins 1,0 % en poids ; et/ou en une quantité d'au plus 15,0 % en poids, de préférence d'au plus 10,0 % en poids, plus préférablement d'au plus 5,0 % en poids ; et/ou
- le sel (L) en une quantité d'au moins 0,5 % en poids, de préférence d'au moins 1,0 % en poids, plus préférablement d'au moins 1,5 % en poids ; et/ou en une quantité d'au plus 10,0 % en poids, de préférence d'au plus 7,5 % en poids, plus préférablement d'au plus 5,0 % en poids ; et/ou
- le solvant (S_{high}) en une quantité d'au moins 1,0 % en poids, de préférence d'au moins 2,0 % en poids, plus préférablement d'au moins 3,0 % en poids ; et/ou en une quantité d'au plus 20,0 % en poids, de préférence d'au plus 15,0 % en poids, plus préférablement d'au plus 12,0 % en poids ;
- le solvant (S_{low}) en une quantité d'au moins 30,0 % en poids, de préférence d'au moins 35,0 % en poids, plus préférablement d'au moins 40,0 % en poids ; et/ou en une quantité d'au plus 85,0 % en poids, de préférence d'au plus 80,0 % en poids, plus préférablement d'au plus 75,0 % en poids ;
tous les % en poids étant rapportés au poids total de la composition (Cₗ).

10. Un procédé [procédé (C)] de préparation de la composition (Cₗ) de l'une quelconque des revendications 1 à 9, ledit procédé comprenant la dissolution du polymère (F) et du polymère (M) sous agitation à une température d'au moins 30° C, de préférence d'au moins 35° C en présence du solvant (S_{high}), du solvant (S_{low}) et du sel (L).

11. Un procédé [procédé (G)] de fabrication d'un film électrolytique polymère gélifié autoportant [film (F_{GE})], ledit procédé comprenant :
Étape 1 - préparation d'une composition (Cₗ) de l'une quelconque des revendications 1 à 9 ;
Étape 2 - traitement de ladite composition (Cₗ) pour obtenir un film humide [film (F_{w})] ;
Étape 3 - séchage dudit film humide (Fᵥᵥ) pour obtenir un film électrolytique polymère gélifié autoportant [film (F_{GE})].

12. Le procédé de la revendication 11, dans lequel l'Étape 1 est le procédé (C) de la revendication 10 ; et/ou dans lequel l'Étape 2 est réalisée par dépôt de la composition (Cₗ) sur un support.

13. Le procédé de la revendication 11 ou 12, dans lequel le film humide (F_{w}) est séché pour obtenir un film (F_{GE}) comprenant une quantité de solvant (S_{low}) d'au plus 2,0 % en poids, de préférence d'au plus 1,0 % en poids, par rapport au poids total dudit film (F_{GE}).

14. Un film électrolytique polymère gélifié autoportant [film (F_{GE})], ledit film (F_{GE}) comprenant :
(i) au moins un copolymère de fluorure de vinylidène comprenant des unités récurrentes dérivées du fluorure de vinylidène en une quantité supérieure à 50 % en moles de toutes ses unités récurrentes, et, facultativement, des unités récurrentes dérivées d'au moins un monomère fluoré supplémentaire différent du fluorure de vinylidène [polymère (F)] ;
(ii) au moins un polymère (méth)acrylique comprenant des unités récurrentes dérivées d'au moins un monomère (méth)acrylique en une quantité supérieure à 50 % en moles de toutes ses unités récurrentes [polymère (M)] ;
(iii) au moins un composé organique possédant un point d'ébullition supérieur à 150°C [solvant (S_{high})] ; et
(iv) au moins un sel de lithium [sel (L)],
dans lequel le rapport en poids du polymère (F) au polymère (M) est d'au moins 3,0.

15. Un dispositif électrochrome [dispositif (EC)] comprenant un film électrolytique polymère gélifié autoportant [film (F_{GE})] de la revendication 14.

16. Un procédé de fabrication d'un dispositif électrochrome [dispositif (EC)], ledit procédé comprenant l'assemblage d'un film électrolytique polymère gélifié autoportant (F_{GE}) de la revendication 14 dans un empilement comprenant, dans l'ordre suivant : (a) un premier substrat de support ; (b) une première couche électroconductrice ; (c) une première couche électrochrome ; (d) ledit film (F_{GE}) ; (e) une seconde couche électrochrome ; (f) une seconde couche électroconductrice ; et (g) un second substrat de support, de manière à fournir le dispositif électrochrome.
